# EUROPEAN PATENT APPLICATION

(11) **EP 4 534 204 A1**
(43) Date of publication of application: **09.04.2025**
(21) Application number: 22944315.5
(22) Date of filing: 02.06.2022
(51) Int. Cl.: B01L 3/14, C12M 1/12

(54) **CENTRIFUGAL TUBE, SINGLE-TUBE CENTRIFUGAL DEVICE, SINGLE-TUBE CENTRIFUGAL REACTION METHOD, AND CONTINUOUS SAMPLE SINGLE-TUBE CENTRIFUGAL SYSTEM**

(71) Applicant: Wang, Chin Hung, Taipei, Taiwan 105 (TW)
(72) Inventor: Wang, Chin Hung, Taipei, Taiwan 105 (TW)
(74) Representative: Pfrang, Tilman
(86) International application number: PCT/CN2022/096844
(87) International publication number: WO 2023/230986

(57) **Abstract**

A centrifugal tube (1) includes an outer tube (101), a cover body (102) sleeved on the outer tube (101) to seal the outer tube (101), and an inner tube (103) disposed in the outer tube (101). The inner tube (103) includes an opening for adding a reactant mixture, a coupling member (1031) for fixing the inner tube (103) in the outer tube (101), a reaction chamber (1032) for a reaction to take place, and a liquid discharge port (1034) in communication with the reaction chamber (1032).

## Description

### BACKGROUND OF THE INVENTION

### FIELD OF THE INVENTION

The present disclosure relates to a centrifugal tube, a single-tube centrifugal device, and a single-tube centrifugal reaction method. More specifically, the present disclosure relates to a centrifugal tube capable of performing vertical centrifugation, a centrifugal device capable of performing single-tube centrifugation, and a single-tube centrifugal reaction method completed by the centrifugal tube and the centrifugal device.

### DESCRIPTION OF THE PRIOR ART

With rapid development of biotechnology nowadays, various automated analysis methods and large-scale sample analysis systems are constantly being introduced. The development of these techniques enables systematic sample analysis to be more convenient and faster. However, for some biochemical analysis with special requirements, raw materials or consumables required may be costly, or it may be difficult to obtain samples, making applications of analysis systems involving a large number of samples infeasible.

Moreover, automatic analysis systems adapted for a large number of samples need to be applied in conjunction with adequate space and environment and are usually deployed in research centers or medical centers, whereas hospitals or research units located in rural or non-city areas may not have sufficient space for these automatic analysis systems. In case timely analysis results are needed, analysis methods and systems occupying less space are necessary.

On the other hand, on the basis of different analysis targets, the number of samples taken and the delivery time may also vary, and a conventional analysis method usually requires a large number of samples in order to be cost effective. Thus, there is also a need for a system capable of flexibly responding to the number and delivery time of samples.

Therefore, the market needs an analysis method suitable for a small number of samples or continuous samples as well as machines and consumables needed thereby.

### SUMMARY OF THE INVENTION

In order to achieve the objects above, the present disclosure provides a centrifugal tube including: an outer tube, including a first accommodation space; a cover body, sleeved on the outer tube to seal the outer tube; and an inner tube, located in the first accommodation space. The inner tube includes: an opening, for adding a reactant mixture into the inner tube; a coupling member, wherein the inner tube is sleeved into in the outer tube by the coupling member and the coupling member makes the inner tube and the outer tube of the centrifugal tube coaxial, wherein a direction of a tube opening of the outer tube facing a bottom is a Z axis, and the axis is a connecting line between center positions of the inner tube and the outer tube on a plane perpendicular to the Z axis; a reaction chamber, in communication with the opening, for accommodating the reactant mixture added from the opening to react, wherein a first narrow mouth is included between the reaction chamber and the opening; and a first liquid discharge port, communicating the reaction chamber with the first accommodation space, and symmetrically disposed in a direction perpendicular to the Z axis.

Preferably, the centrifugal tube further includes a first one-way valve disposed at the first liquid discharge port. The first one-way valve is controlled by a first centrifugal force to open or close, so as to discharge a waste liquid in the reaction chamber from the reaction chamber to the first accommodation space via the first liquid discharge port when the first one-way valve is open.

Preferably, the reaction chamber includes a first reaction space and a second reaction space. The first reaction space is in communication with the opening, the first narrow mouth is included between the first reaction space and the opening, and a second narrow mouth is included between the first reaction space and the second reaction space, wherein the first liquid discharge port is located in the first reaction space and the second reaction space includes a second liquid discharge port.

Preferably, a first one-way valve disposed at the second liquid discharge port is further included. The first one-way valve is controlled by a first centrifugal force to open or close, so as to discharge a waste liquid in the reaction chamber from the reaction chamber to the first accommodation space via the second liquid discharge port when the first one-way valve is open.

Preferably, the centrifugal tube further includes a supplement agent tank. The supplement agent tank includes an agent tank, a holding tank and a second one-way valve, wherein the holding tank is in communication with the reaction chamber.

Preferably, the second one-way valve is a mechanical valve, an electrically-controlled valve or a magnetically-controlled valve.

Preferably, the centrifugal tube further includes a combination of multiple one-way valves and liquid discharge ports symmetrically disposed relative to the axis.

Preferably, the first narrow mouth exhibits a 30 to 60-degree included angle relative to the Z axis.

Preferably, the second narrow mouth exhibits a 30 to 45-degree included angle relative to the Z axis.

A single-tube centrifugal device is further provided according to another aspect of the present disclosure. The single-tube centrifugal device includes a centrifuge and a fixing member, wherein the fixing member fixes the centrifugal tube above, and the centrifuge and the centrifugal tube are coaxial.

A single-tube centrifugal reaction method is further provided according to yet another aspect of the present disclosure. The single-tube centrifugal reaction method includes: adding a reactant mixture into the centrifugal tube above for reaction; disposing the centrifugal tube in the single-tube centrifugal device above, and fixing the centrifugal tube by the fixing member; and centrifuging the centrifugal tube to discharge a waste liquid.

With the technical features above, the present disclosure provides at least the following advantages:
(1) With the centrifugal tube of the embodiments of the present disclosure, single-tube operations can be performed, and analysis can be carried out without the need for the preparation of multiple samples.
(2) With the centrifugal tube and the single-tube centrifugal device of the embodiments of the present disclosure, a waste liquid can be simply discharged by means of single-tube centrifugation after reaction is done, and consumables can also be reduced.
(3) By combining the centrifugal tube, the single-tube centrifugal device and the single-tube centrifugal reaction method of the embodiments of the present disclosure, biochemical analysis of a small amount of samples can be completed quickly and conveniently.

### BRIEF DESCRIPTION OF THE DRAWINGS

FIG. 1 is an exploded schematic diagram of a centrifugal tube according to an embodiment of the present disclosure.
FIG. 2 is a side schematic diagram of a centrifugal tube according to an embodiment of the present disclosure.
FIG. 3 is a perspective schematic diagram of a centrifugal tube according to an embodiment of the present disclosure.
FIG. 4 is a schematic diagram of a liquid discharge port of a centrifugal tube according to an embodiment of the present disclosure.
FIG. 5 is a partial enlarged schematic diagram of a joint of a coupling member and a cover body of a centrifugal tube according to an embodiment of the present disclosure.
FIG. 6 is a schematic diagram of a narrow mouth of an inner tube according to an embodiment of the present disclosure.
FIG. 7 is a perspective schematic diagram of an inner tube 103a according to another embodiment of the present disclosure.
FIG. 8 is a perspective schematic diagram of an inner tube 103a according to yet another embodiment of the present disclosure.
FIG. 9 is a schematic diagram of open and closed states of a supplement agent tank according to an embodiment of the present disclosure.
FIG. 10 is a schematic diagram of a supplement agent tank according to another embodiment of the present disclosure.
FIG. 11 is a perspective schematic diagram of a single-tube centrifuge according to another embodiment of the present disclosure.
FIG. 12 is a cross-sectional diagram of a single-tube centrifuge according to another embodiment of the present disclosure.
FIG. 13 is a schematic diagram of the bottom form of a centrifugal tube according to another embodiment of the present disclosure.
FIG. 14 is a flowchart of a single-tube centrifugal reaction method according to an embodiment of the present disclosure.

### DETAILED DESCRIPTION OF THE EMBODIMENTS

Embodiments are described in detail with reference to the accompanying drawings below. However, these embodiments may be implemented in different forms, which are not the only forms for implementing or practicing the specific embodiments of the present disclosure and are not to be construed as limitations to the embodiments above. The implementation forms encompass features of numerous specific embodiments as well as method steps and orders for constructing and operating these specific embodiments. However, other specific embodiments may also be used to implement the same or equivalent functions and orders of the steps. On the contrary, the embodiments provided are for thorough and full disclosure of the present specification to comprehensively and completely express the spirit of the present disclosure to a person of ordinary skill in the art. Similar element denotations given in the accompanying drawings refer to similar elements. In the description below, known functions or structures are not described in detail so as to omit unnecessary details in the embodiments.

Unless otherwise specified, all technical terms used in the present disclosure have the same meanings commonly understood by a person of ordinary skill in the art. In case of conflicts, definitions given in the present specification prevail.

Without incurring any conflicts in the context, singular nouns used in the present specification cover plural forms of the nouns, and plural nouns also cover a singular form of the nouns. Moreover, in the present specification and the claims, meanings of expressions "at least one" and "one or more" are the same, both of which include one, two, three or more.

The term "consisting essentially of" is for defining compositions, methods or devices, and includes materials, steps, features, compositions or components other than those explicitly described, under the restriction that these additional materials, steps, features, compositions or components do not significantly affect the fundamental or novel features asserted by the present disclosure. The expression "consisting essentially of" lies somewhere between "comprising" and "consisting of".

Although the numerical ranges and parameters for defining broader ranges of the present disclosure are approximate values, it should be noted that the related values in the specific embodiments are presented as accurately as possible. However, any value intrinsically and inevitably contain a standard deviation as a result of individual testing methods. Herein, "about/approximate" usually refers to an actual numerical value which is within positive/negative 10%, 5%, 1% or 0.5% of a specific numerical value or range. Alternatively, the term "about/approximate" means that an actual numerical value that is within an acceptable standard tolerance of an average value, depending on the consideration of a person of ordinary skill in the art. In addition to the embodiments, unless otherwise explicitly specified, it should be understood that all ranges, quantities, numerical values and percentages (for example, the amount of materials, the duration of a time period, temperature, operating conditions, a ratio of quantity and the like) are modified by the term "about/approximate". Therefore, unless specified otherwise, the numerical values and parameters disclosed in the present specification and claims are all approximate values, and are variable depending on requirements. These numerical values and parameters should be at least understood as the numbers of significant digits specified and values obtained by applying an ordinary rounding method. Herein, a numerical range is represented as from one endpoint to another endpoint or between two endpoints; unless otherwise specified, all of the numerical ranges described herein include endpoints.

A centrifugal tube, a single-tube centrifugal device, and a single-tube centrifugal reaction method of the present disclosure are described by way of the specific embodiments below.

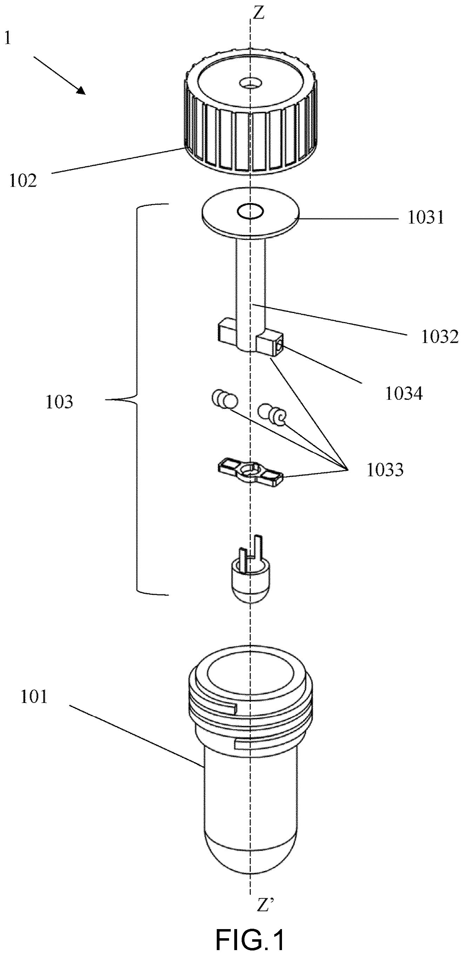

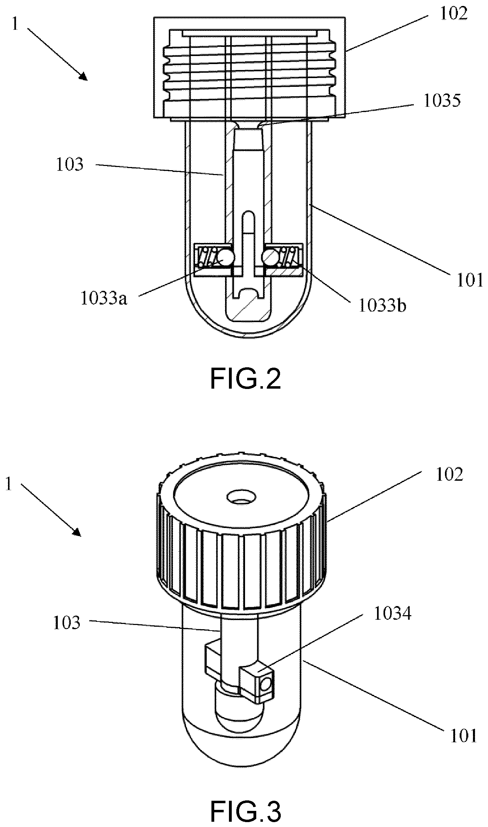

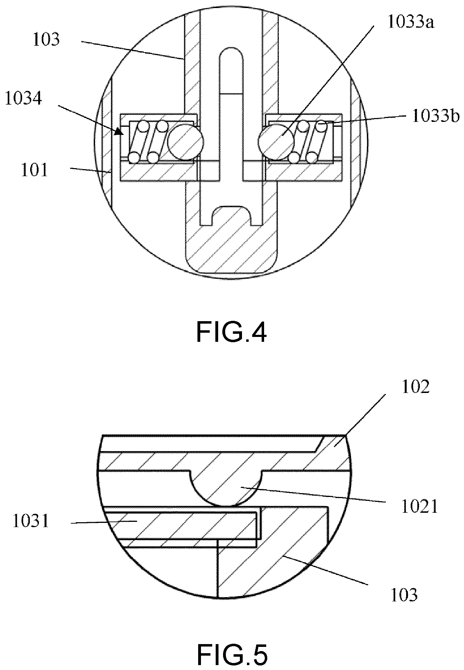

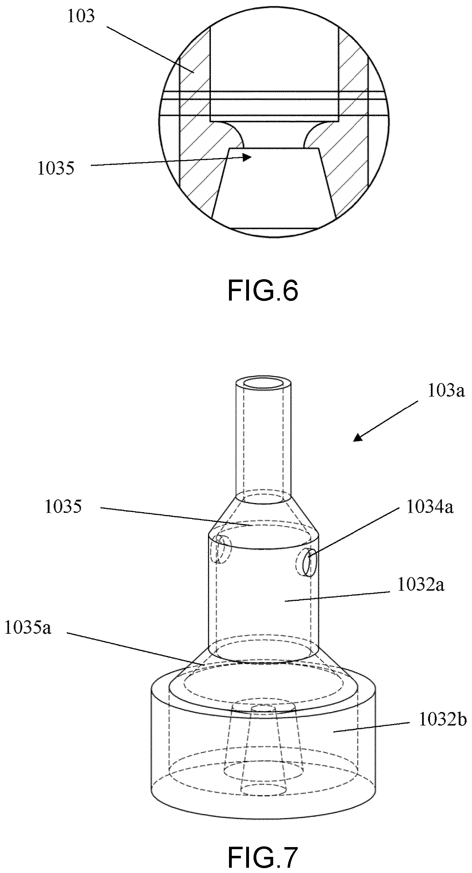

Refer to FIG. 1 to FIG. 6. FIG. 1 shows an exploded schematic diagram of a centrifugal tube 1 according to an embodiment of the present disclosure. FIG. 2 shows a side schematic diagram of the centrifugal tube 1 according to an embodiment of the present disclosure. FIG. 3 shows a perspective schematic diagram of the centrifugal tube 1 according to an embodiment of the present disclosure. FIG. 4 shows a schematic diagram of a liquid discharge port 1034 of the centrifugal tube 1 according to an embodiment of the present disclosure. FIG. 5 shows a partial enlarged schematic diagram of a joint of a coupling member 1031 and a cover body 102 of the centrifugal tube 1 according to an embodiment of the present disclosure. FIG. 6 shows a schematic diagram of a first narrow mouth 1035 of an inner tube 103 of the centrifugal tube 1 according to an embodiment of the present disclosure.

The centrifugal tube 1 according to the embodiment of the present disclosure may include an outer tube 101, the cover body 102 and the inner tube 103. The cover body 102 may sleeve over (for example, fixedly sleeved by a screw thread) on an outside of an opening of the outer tube 101 to seal the outer tube 101. The inner tube 103 may be disposed in an accommodation space formed by the outer tube 101. The inner tube 103 may include the coupling member 1031, a reaction chamber 1032, a first one-way valve 1033 and a liquid discharge port 1034, wherein the coupling member 1031 may sleeve on an inside of the opening of the outer tube 101. The first one-way valve 1033 may include, for example, a steel ball 1033a and a spring 1033b. In one embodiment, as shown in FIG. 5, the cover body 102 may include a protrusion 1021 at a position corresponding to the coupling member 1031, so as to further tightly press the coupling member 1031 when the cover body 102 is sleeved over (for example, fixedly sleeved by a screw thread) the outer tube 101 and better secure the position of the inner tube 103.

In the embodiment below, a direction of a tube opening of the centrifugal tube 1, the outer tube 101 or the inner tube 103 facing the bottom is the Z axis, and a connecting line between center positions of the inner tube and the outer tube on a plane perpendicular to the Z axis is an axis thereof (for example, the connecting line ZZ'). When the inner tube 103 is sleeved on the inside of the opening of the outer tube 101 by the coupling member 1031, the inner tube 103 is fixed in the accommodation space in the outer tube 101 coaxially with the outer tube 101, and can thus be kept stable during rotation and centrifugation of the centrifugal tube 1. According to another embodiment of the present disclosure, the coupling member 1031 of the inner tube 103 may sleeve on the outside of the outer tube 101; however, the present disclosure is not limited to the examples above, and the inner tube 103 may be fixed by any appropriate means in the outer tube 101.

As shown in FIG. 4, the centrifugal tube 1 according to an embodiment of the present disclosure includes a pair of liquid discharge ports 1034 symmetrically disposed relative to the axis, wherein each liquid discharge port 1034 is provided with the first one-way valve 1033. The first one-way valve 1033 includes the steel ball 1033a and the spring 1033b. During rotation and centrifugation of the centrifugal tube 1, the pair of liquid discharge ports 1034 symmetrically disposed relative to the axis enable the centrifugal tube 1 to be balanced and prevent it from shaking. Once the centrifugation has stopped, the steel ball 1033a in the first one-way valve 1033 in the liquid discharge port 1034 is subjected to a pushing force of the spring 1033b to press against and thus close an opening that communicates with the reaction chamber 1032. When the rotating speed increases and a centrifugal force threshold is reached, the centrifugal force exerted on by the steel ball 1033a is greater than the pushing force of the spring 1033b and thus compresses the spring 1033b, thereby communicating the reaction chamber 1032 with the liquid discharge port 1034 to discharge a waste liquid from the reaction chamber 1032 via the liquid discharge port 1034. When the centrifugal force is less than the threshold, the steel ball 1033a is pushed back by the pushing force from the spring 1033b, thus closing the communication between the reaction chamber 1032 and the liquid discharge port 1034. The steel ball 1033a and the spring 1033b may have different configurations; for example, the steel ball may have different weights and the spring may have different elastic forces, so as to adapt to different requirements. In another embodiment, a communication position between the reaction chamber 1032 and the liquid discharge port 1034 may include a filter net, filter paper or a semi-permeable membrane.

According to an embodiment of the present disclosure, the centrifugal tube 1 may be used in conjunction with magnetic beads, and blocking may be achieved by the filter net or filter paper mentioned above in order to prevent the magnetic beads from escaping via the liquid discharge port 1034 during centrifugation. The shape of the reaction chamber 1032 in a top view may be a circle or a polygon. When the shape of the reaction chamber 1032 in a top view is a polygon, the liquid discharge ports 1034 may be disposed at symmetrical vertices of the polygon so as to enhance a liquid discharge effect during centrifugation. According to another embodiment of the present disclosure, a magnetic force generating device may be disposed at the axis or around the circumference of the centrifugal tube 1 to generate a magnetic force, so as to retain the magnetic beads at a center of the centrifugal tube 1 and prevent them from being discharged during centrifugation.

According to another embodiment of the present disclosure, the liquid discharge ports 1034 may have different configurations, for example, there may be 4 or 6 liquid discharge ports symmetrically disposed relative to the axis. Moreover, the first one-way valve 1033 in the liquid discharge port 1034 is not limited to being a combination of a steel ball and a spring, and may be electrically or magnetically controlled to open or close and similarly discharge waste liquid by means of a centrifugal force. According to an embodiment of the present disclosure, the first one-way valve 1033 may be disposed at a position close to the axis of the inner tube 103 in the liquid discharge port 1034; however, the present disclosure is not limited to the example above. The first one-way valve 1033 may be disposed at a position away from the axis of the inner tube 103 in the liquid discharge port 1034, or at a position at which the one-way valve can be opened by means of centrifugal force, electric control or magnetic control to further discharge waste liquid.

According to an embodiment of the present disclosure, the first narrow mouth 1035 may be disposed between the reaction chamber 1032 and the tube opening in the inner tube 103. The first narrow mouth 1035 may be formed by an inner wall of the reaction chamber 1032 inclined toward the axis. When the centrifugal tube 1 centrifuged about the axis as a center, a reactant mixture in the reaction chamber 1032 will move toward the inner wall of the reaction chamber 1032 away from the axis due to the centrifugal force. Along with an increase in the rotating speed, the centrifugal force increases, causing the reactant mixture to move along the inner wall of the reaction chamber 1032 toward the tube opening. To prevent the reactant mixture from overflowing through the tube opening during centrifugation, the first narrow mouth 1035 may be disposed between the reaction chamber 1032 and the tube opening in the inner tube 103. The first narrow mouth 1035 forms a 30 to 60-degree included angle relative to the axis, and preferably forms a 45-degree included angle. When the reactant mixture is moving along the inner wall of the reaction chamber 1032 toward the tube opening during the process of centrifugation, the first narrow mouth 1035 at a predetermined angle relative to the axis can keep the reactant mixture in the reaction chamber 1032 and prevent it from overflowing.

Refer to FIG. 7. FIG. 7 shows a perspective schematic diagram of an inner tube 103a according to another embodiment of the present disclosure.

According to an embodiment of the present disclosure, the centrifugal tube 1 of the present disclosure includes the inner tube 103a. Except for the configuration of the inner tube 103a, the rest of the centrifugal tube 1 of this embodiment is the same as the embodiments above and related repeated details are omitted herein.

The reaction chamber 1032 of the inner tube 103a includes a first reaction space 1032a and a second reaction space 1032b, wherein an inner diameter of the second reaction space 1032b is greater than that of the first reaction space 1032a. A second narrow mouth 1035a is included between the first reaction space 1032a and the second reaction space 1032b. An included angle of the second narrow mouth 1035a relative to the Z axis may be 30 degrees to 60 degrees, preferably 30 degrees to 45 degrees, and more preferably 45 degrees. A reactant mixture, when added into the reaction chamber 1032, falls into the second reaction space 1032b for reaction (or the reactant mixture, if in a large amount, may also fill up to the first reaction space 1032a), and centrifugation of the centrifugal tube 1 may be performed after the reaction is completed so as to discharge waste liquid. In the course of centrifugation, the waste liquid moves to a sidewall of the second reaction space 1032b due to centrifugal force, as the centrifugal speed increases, the waste liquid takes the shape of a donut on the sidewall of the second reaction space 1032b. Meanwhile, the waste liquid under the influence of the centrifugal force also moves up to the sidewall of the first reaction space 1032a, and is discharged via a first liquid discharge port 1034a of the first reaction space 1032a into a first accommodation space between the outer tube 101 and the inner tube 103a, while the reactant mixture of a predetermined volume can be preserved in the second reaction space 1032b. By preserving part of the liquid, suction can be readily performed when the reactant mixture includes magnetic beads. In this embodiment, due to the absence of a valve at the liquid discharge port 1034a, the waste liquid is directly discharged into the first accommodation space. In another embodiment, the liquid discharge port 1034a may also be provided with the one-way valve above to control the discharge of the waste liquid; however, the present is not limited to the example mentioned above.

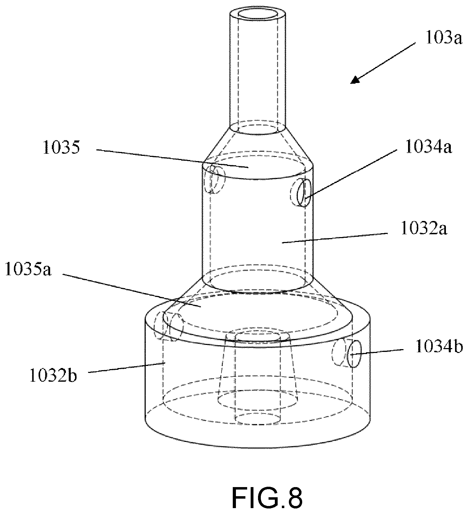

Refer to FIG. 8. FIG. 8 shows a perspective schematic diagram of an inner tube 103a according to yet another embodiment of the present disclosure.

The configuration of the inner tube 103a in the centrifugal tube 1 of this embodiment is fundamentally the same as that of the embodiment above, and merely differences thereof are described herein. In this embodiment, the sidewall of the second reaction space 1032b further includes a second liquid discharge port 1034b, and a one-way valve (not shown) is disposed at the second liquid discharge port 1034b. When a reactant mixture has fully reacted in the second reaction space 1032b, same as described in the embodiment above, part of the waste liquid may be discharged by means of centrifugation via the first liquid discharge port 1034a into the first accommodation space. Preferably, when all liquid needs to be completely discharged, the one-way valve disposed at the second liquid discharge port 1034b may be opened by means of controlling a centrifugal force, so as to discharge a waste liquid via the second liquid discharge port 1034b into the first accommodation space. The embodiments above are merely examples, and the present disclosure is not limited thereto. Alternatively, multiple liquid discharge ports may be provided, or valves in different forms may be provided, or a filter net, filter paper or a semi-permeable membrane may be disposed at a liquid discharge port. According to yet another embodiment of the present disclosure, the height of the second liquid discharge port 1034b in the second reaction space 1032b may be controlled to similarly control a remaining amount of liquid in the second reaction space 1032b.

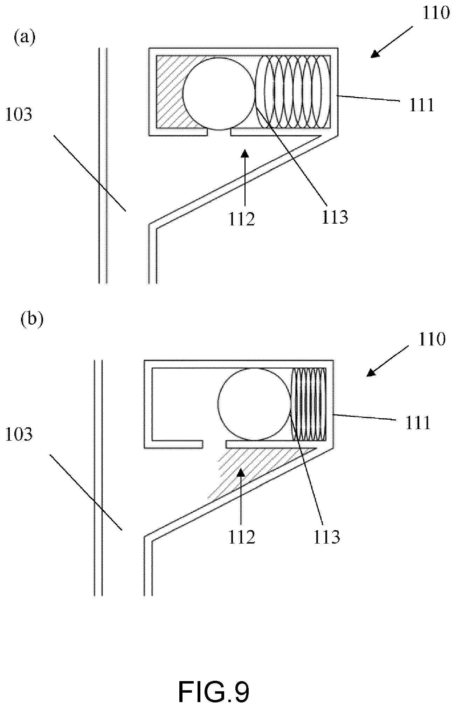

Refer to FIG. 9. FIG. 9 shows a schematic diagram of a closed state (a) and an open state (b) of a supplement agent tank 110 according to an embodiment of the present disclosure. Only one side is depicted in FIG. 9 for illustration; however, the present disclosure is not limited thereto.

According to an embodiment of the present disclosure, the centrifugal tube 1 of the present disclosure may further include the supplement agent tank 110, and the number of the supplement agent tank 110 may be determined according to the quantity of the supplement agents used. In one embodiment, the inner tube 103 may be provided with one supplement agent tank 110, which may include an agent tank 111, a holding tank 112 and a second one-way valve 113. The second one-way valve 113 controls the opening and closing between the agent tank 111 and the holding tank 112, and the holding tank 112 is in communication with the inner tube 103. An opening threshold of the second one-way valve 113 may be different from that of the first one-way valve 1033. For example, a centrifugal force threshold for opening the second one-way valve 113 may be greater than that of the first one-way valve 1033. An initial state of the supplement agent tank 110 is as shown by part (a) in FIG. 9. In this state, the second one-way valve 113 abuts against the opening such that the supplement agent is stored in the agent tank 111. Once a reactant mixture passes through the inner tube 103 and gets mixed in the reaction chamber 1032, centrifugation may be performed at a first rotating speed. At this point in time, the first one-way valve 1033 opens to discharge waste liquid of the reactant mixture via the liquid discharge ports 1034. Next, the rotating speed may be increased to a second rotating speed greater than the first rotating speed for centrifugation. Once the centrifugal force threshold of the second one-way valve 113 is reached, the second one-way valve 113 opens, and the supplement agent placed in the agent tank 111 falls into the holding tank 112, as shown by part (b) in FIG. 9. Once the centrifugation is stopped, the supplement agent falls due to the gravitational force into the inner tube 103 and arrives at the reaction chamber 1032 to combine with the reactant mixture residing in the reaction chamber 1032 for a next reaction. Alternatively, the second one-way valve may also be electrically controlled or magnetically controlled. Moreover, when the supplement agent tank 110 is single in quantity, a counterweight may be disposed at a position symmetrically relative to the axis on a plane perpendicular to the Z axis on the centrifugal tube 1 so as to keep it balanced during centrifugation. Preferably, the supplement agent tank 110 is disposed between the first narrow mouth 1035 and the tube opening. According to another embodiment of the present disclosure, the supplement agent tank 110 may be disposed between the first narrow mouth 1035 and the reaction chamber 1032.

According to another embodiment of the present disclosure, multiple supplement agent tanks may be disposed symmetrically relative to the axis on a plane perpendicular to the Z axis on the centrifugal tube 1. For example, a first supplement agent tank and a second supplement agent tank may be disposed. The first supplement agent tank and the second supplement agent tank are structurally similar to the supplement agent tank above, and respectively include first and second agent tanks, first and second holding tanks and further respectively include a third one-way valve and a fourth one-way valve. Centrifugal force thresholds for opening the third one-way valve and the fourth one-way valve of the first supplement agent tank and the second supplement agent tank are different. In a practical operation, once a reactant mixture gets mixed in the reaction chamber, centrifugation may be performed at a first rotating speed. At this point in time, the first one-way valve 1033 opens to discharge waste liquid of the reactant mixture via the liquid discharge port 1034. At this point in time, the rotating speed may be increased to a third rotating speed greater than the first rotating speed for centrifugation. Once the centrifugal force threshold of the third one-way valve is reached, the third one-way valve opens, and the first supplement agent placed in the first supplement agent tank falls into the first holding tank. Once the centrifugation is stopped, the first supplement agent falls due to the gravitational force into the inner tube 103 and arrives at the reaction chamber 1032, combining with the reactant mixture residing in the reaction chamber 1032 for a next reaction. Next, once the reactant mixture completes mixing and reacting with the first supplement agent, centrifugation can be performed at the first rotating speed. At this point in time, the first one-way valve 1033 opens to discharge the waste liquid of the reactant mixture via the liquid discharge port 1034. Next, the rotating speed may be increased to a fourth rotating speed greater than the third rotating speed for centrifugation. Once the centrifugal force threshold of the fourth one-way valve is reached, the fourth one-way valve opens, and the second supplement agent placed in the second supplement agent tank falls into the second holding tank. Once the centrifugation is stopped, the second supplement agent falls due to the gravitational force into the inner tube 103 and flows into the reaction chamber 1032 to combine with the reactant mixture residing in the reaction chamber 1032 for a next reaction. The embodiments above are merely examples, and the present disclosure is not limited thereto. Depending on requirements, the third and fourth one-way valves in the first and second supplement agent tanks may have the same or different centrifugal force thresholds for opening.

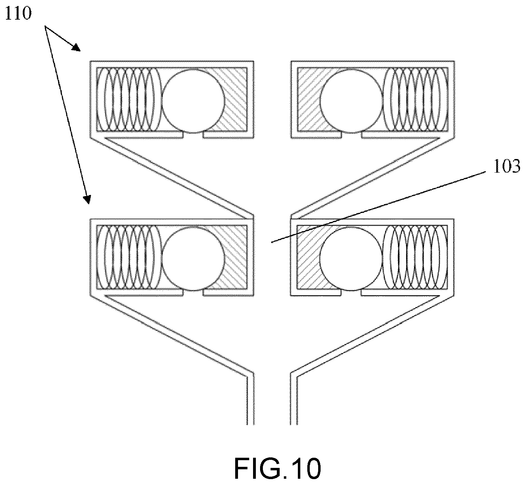

According to another embodiment of the present disclosure, the supplement agent tank may be combined in an overlaying layered manner in the centrifugal tube 1. For example, as shown in FIG. 10, the supplement agent tanks may be disposed in an overlaying manner in the centrifugal tube 1. More specifically, the supplement agent tank of this embodiment may have a tube diameter the same as or similar to that of the inner tube 103 of the centrifugal tube 1, structures of the agent tank, the one-way valve and the holding tank in the supplement agent tank 110 described above may be provided therein, required agents may be added thereto, and an embedding portion (not shown) for overlaying can be included. Meanwhile, the threshold of the one-way valve in the supplement agent tank is different from the threshold of the first one-way valve 1033 in the centrifugal tube 1. Thus, the required agent may be combined in an overlaying manner to the centrifugal tube 1 so as to achieve the effect of adding agents. Moreover, when multiple supplement agent tanks are layered, the thresholds of the one-way valves in these supplement agent tanks are different from one another.

In this embodiment, the supplement agent tanks are disposed symmetrically relative to the axis of the centrifugal tube 1, and different supplement agents are provided by means of layering upward, so as to prevent difficulties in providing multiple supplement agents in a rather limited space on a same plane. Further, for one supplement agent, a concentrated liquid and a dilution liquid in a predetermined ratio and of equal mass may be provided in symmetrical supplement agent tanks, so as to maintain the balance of the centrifugal tube 1 while the one-way valve opens and while the supplement agent flows into the holding tank.

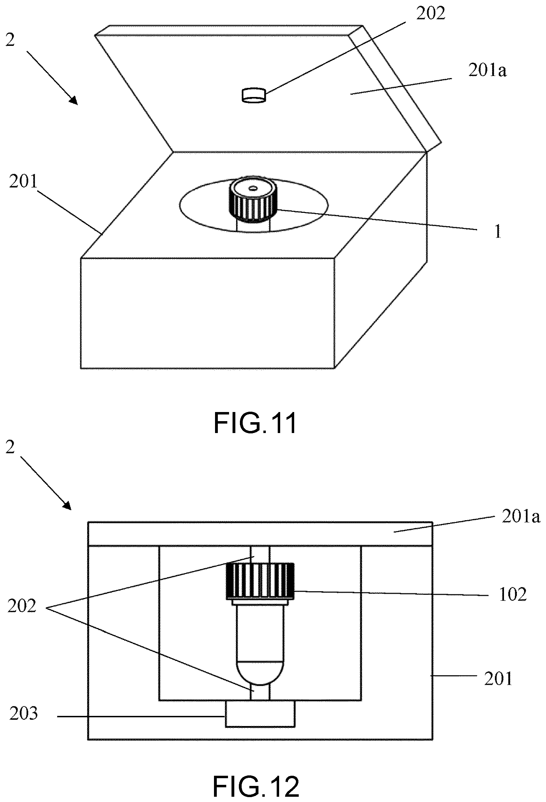

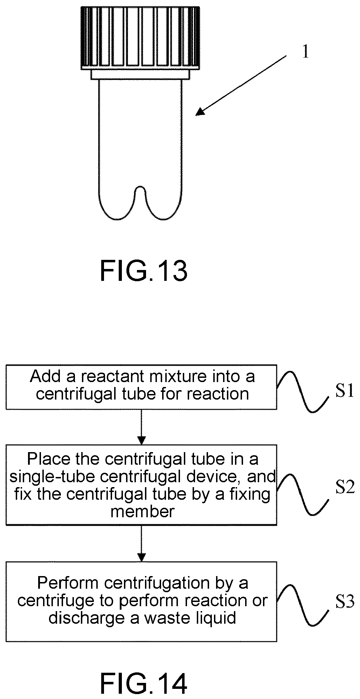

Refer to FIG. 11 to FIG. 13. FIG. 11 shows a perspective schematic diagram of a single-tube centrifuge 2 according to another embodiment of the present disclosure. FIG. 12 shows a cross-sectional diagram of the single-tube centrifuge 2 according to another embodiment of the present disclosure. FIG. 13 shows a schematic diagram of the bottom form of a centrifugal tube 1 according to another embodiment of the present disclosure.

A single-tube centrifugal device 2 is provided according to another aspect of the present disclosure. The single-tube centrifugal device 2 includes a centrifuge 201 and a fixing member 202 for fixing the centrifugal tube 1. The centrifuge 201 may include a motor 203 for providing a centrifugal force. During use, the centrifugal tube 1 is fixed on the centrifuge 201 by the fixing member 202, and different rotating speeds are provided to provide different centrifugal forces.

In one embodiment, the fixing member 202 may be disposed only at the bottom of the outer tube 101 of the centrifugal tube 1, or may be provided at both the cover body 102 of the centrifugal tube 1 and a cover body 201a of the centrifuge 201. The fixing member 202 may fix the centrifugal tube 1 by any means, for example, clamping the centrifugal tube 1 from the outside, or as shown in FIG. 13, and a groove is provided at the bottom of the centrifugal tube 1 to assist in fixing the centrifugal tube 1 to the fixing member 202. The groove disposed at the bottom of the centrifugal tube 1 may be in such as a straight shape, a cross shape, a quadrangular shape, a polygonal shape, or in any suitable shape that allows secure fixing on the centrifuge 201. In this embodiment, the rotation of the centrifugal tube 1 is powered by the motor 203, and thus the fixing member 202 connected to the bottom of the centrifugal tube 1 securely fixes the centrifugal tube 1 on the centrifuge 201. On the contrary, the fixing member 202 on the cover body 201a of the centrifuge 201 may have a fixing structure corresponding to the cover body 102 of the centrifugal tube 1, and can secure it in the single-tube centrifugal device 2 without affecting the centrifugation of the centrifugal tube 1. In another embodiment, the centrifuge may simultaneously accommodate multiple (that is, more than one) centrifugal tubes 1, and the centrifugal tubes 1 may be independently fixed on the centrifuge and independently perform centrifugation without requiring any counterweight.

A single-tube centrifugal system for continuous samples is provided according to an embodiment of the present disclosure. The single-tube centrifugal system for continuous samples includes a carrier platform, a single-tube centrifuge disposed on the carrier platform, a track for carrying the carrier platform to move, an identification unit disposed on the track, and a control module for controlling the carrier platform to move and controlling the single-tube centrifuge to centrifuge. The single-tube centrifuge is, for example, the single-tube centrifuge described in the embodiments above, and is suitable for the centrifugal tube in the embodiments above.

According to an embodiment of the present disclosure, when a user receives samples and uses the single-tube centrifugal system for continuous samples, the samples and a reagent are injected into the centrifugal tube, each assigned with identification labels for identification by the identification unit. The user places the centrifugal tube on the single-tube centrifuge on the carrier platform on the track, and moves the carrier platform by the control module, so as to perform steps of centrifuging and adding a reagent at different positions, and determines the analysis progress by identifying the identification labels on the centrifugal tube using the identification unit. The identification labels may be barcodes, two-dimensional codes or any identifiable labels. According to another embodiment of the present disclosure, required supplement reagent tanks may be layered to eliminate any additional apparatus needed for adding reagents. Preferably, the system may further include apparatus for heating, cooling and oscillation, so as to adapt to different experimental requirements. Thus, with the multiple carrier platforms on the track and the single-tube centrifuge thereon, samples can be controlled to move on the track, and different reaction steps can be performed at different positions, without having to wait until the number of samples reaches a certain amount before starting. With control of the automated control system, steps such as adding a reagent can also be implemented by the supplement reagent tank, and different reagents can be added by only controlling different rotating speeds, hence further saving large amounts of manpower and material resources.

A single-tube centrifugal reaction method is provided according to another aspect of the present disclosure. As shown in FIG. 14, the single-tube centrifugal reaction method includes step S1 of adding a reactant mixture into a centrifugal tube for reaction, wherein the reactant mixture added into the inner tube 103 passes through the first narrow mouth 1035 and falls into the reaction chamber 1032 for reaction; step S2 of placing the centrifugal tube 1 in the single-tube centrifugal device 2, and fixing the centrifugal tube 1 by the fixing member 202; and step S3 of performing centrifugation by the centrifuge 201 to perform reaction or discharge waste liquid. According to different experimental approaches, a step of releasing an agent in the supplement agent tank 110 may be further included, and the object of releasing the agent can be achieved by changing the rotating speed of the centrifuge 201.

It should be noted that the description above is merely illustrative rather than restrictive. All equivalent modifications or variations made to the embodiments above without departing the spirit or scope of the present disclosure are encompassed within the scope defined by the appended claims.

## Claims

1. A centrifugal tube, comprising:
an outer tube, comprising a first accommodation space;
a cover body, sleeved on the outer tube to seal the outer tube; and
an inner tube, located in the first accommodation space, and comprising:
an opening, for adding a reactant mixture into the inner tube;
a coupling member, the inner tube is sleeved into the outer tube by the coupling member, the coupling member rendering the inner tube and the outer tube of the centrifugal tube to have a same axis, wherein a direction of a tube opening of the outer tube facing a bottom is a Z axis, and the axis is a connecting line between center positions of the inner tube and the outer tube on a plane perpendicular to the Z axis;
a reaction chamber, in communication with the opening, for accommodating the reactant mixture added from the opening for reaction, a first narrow mouth further comprised between the reaction chamber and the opening; and
a first liquid discharge port, communicating the reaction chamber with the first accommodation space, and symmetrically disposed in a direction perpendicular to the Z axis.

2. The centrifugal tube according to claim 1, further comprising:
a first one-way valve, disposed at the first liquid discharge port, the first one-way valve being controlled by a first centrifugal force to open or close, so as to discharge waste liquid in the reaction chamber from the reaction chamber to the first accommodation space via the first liquid discharge port when the first one-way valve is open.

3. The centrifugal tube according to claim 1, wherein the reaction chamber comprises a first reaction space and a second reaction space, the first reaction space is in communication with the opening, the first narrow mouth is included between the first reaction space and the opening, and a second narrow mouth is included between the first reaction space and the second reaction space, the first liquid discharge port is located in the first reaction space and the second reaction space comprises a second liquid discharge port.

4. The centrifugal tube according to claim 3, further comprising:
a first one-way valve, disposed at the second liquid discharge port, wherein the first one-way valve is controlled by a first centrifugal force to open or close, so as to discharge waste liquid in the reaction chamber from the reaction chamber to the first accommodation space via the second liquid discharge port when the first one-way valve is open.

5. The centrifugal tube according to any one of claims 1 to 4, further comprising:
a supplement agent tank, comprising an agent tank, a holding tank and a second one-way valve, wherein the holding tank is in communication with the reaction chamber.

6. The centrifugal tube according to claim 5, wherein the second one-way valve is a mechanical valve, an electrically-controlled valve or a magnetically-controlled valve.

7. The centrifugal tube according to claim 6,further comprising:
a combination of a plurality of one-way valves and liquid discharge ports symmetrically disposed relative to the axis.

8. The centrifugal tube according to claim 1, wherein the first narrow mouth exhibits a 30 to 60-degree included angle relative to the Z axis.

9. The centrifugal tube according to claim 3 or 4, wherein the second narrow mouth exhibits a 30 to 45-degree included angle relative to the Z axis.

10. A single-tube centrifugal device, comprising a centrifuge and a fixing member, wherein the fixing member fixes the centrifugal tube according to any one of claims 1 to 9, and the centrifuge is coaxial with the centrifugal tube.

11. A single-tube centrifugal reaction method, comprising:
adding a reactant mixture into the centrifugal tube according to any one of claims 1 to 9 for reaction;
disposing the centrifugal tube in the single-tube centrifugal device according to claim 10, and fixing the centrifugal tube by the fixing member; and
centrifuging the centrifugal tube to perform reaction or discharge a waste liquid.

12. A single-tube centrifugal system for continuous samples, comprising:
a carrier platform;
the single-tube centrifugal device according to claim 10, disposed on the carrier platform;
a track, for carrying the carrier platform to move;
an identification unit, disposed on the track; and
a control module, controlling the carrier platform to move and controlling the single-tube centrifugal device to centrifuge.

13. The single-tube centrifugal system for continuous samples according to claim 12, wherein the single-tube centrifugal device comprises an identification label, and the identification unit identifies the identification label.
